# EUROPÄISCHE PATENTSCHRIFT

(11) **EP 2 193 409 B1**
(45) Veröffentlichungstag und Bekanntmachung des Hinweises auf die Patenterteilung: **06.07.2011**
(21) Anmeldenummer: 07818413.2
(22) Anmeldetag: 25.09.2007
(51) Int. Cl.: G05B 19/042, G05B 19/418

(54) **SYSTEM UND VERFAHREN ZUR MODELLIERUNG VON SIGNALFLÜSSEN IN AUTOMATISIERUNGSTECHNISCHEN ANLAGEN**
SYSTEM AND METHOD FOR MODELING SIGNAL FLOWS IN AUTOMATION TECHNOLOGY EQUIPMENT
SYSTÈME ET PROCÉDÉ DE MODÉLISATION DE FLUX DE SIGNAUX DANS DES INSTALLATIONS INDUSTRIELLES D'AUTOMATISATION

(43) Veröffentlichungstag der Anmeldung: 09.06.2010
(73) Patentinhaber: Siemens Aktiengesellschaft, 80333 München (DE)
(72) Erfinder: STOLPER, Thilo, 90402 Nürnberg (DE)
(86) Internationale Anmeldenummer: PCT/EP2007/008329
(87) Internationale Veröffentlichungsnummer: WO 2009/046726

(56) Entgegenhaltungen:
- WO-A-01/04748
- DE-A1- 10 134 940
- DE-A1-102004 019 432
- SPATH D ET AL: "3-D-Projektierung und Simulation von Ablaufsteuerungen" WERKSTATTSTECHNIK, SPRINGER VERLAG. BERLIN, DE, Bd. 90, Nr. 7-8, 31. August 2000 (2000-08-31), Seiten 292-296, XP002254620 ISSN: 0340-4544

## Beschreibung

Die Erfindung betrifft ein System und ein Verfahren zur Erzeugung eines Verhaltensmodells zur Simulation eines Automatisierungssystems, bei dem Signalflüsse zwischen Komponenten des Automatisierungssystems nachgebildet werden.

Ein derartiges System bzw. Verfahren kommt insbesondere bei der Planung und der Projektierung von Systemen für die Fertigungs- und/oder Prozessautomatisierung zum Einsatz. Fertigungstechnische Anlagen sind heute sehr komplex und zu einem hohen Grad automatisiert. Die für die Steuerung der Komponenten dieser Anlage benötigte Steuerungssoftware weist ebenfalls eine erhebliche Komplexität auf. Für eine reibungslose Inbetriebnahme eines automatisierungstechnischen Systems ist es daher wünschenswert, die Steuerungssoftware bereits vor der Inbetriebnahme eines Automatisierungssystems zu testen. Daher werden heutzutage verstärkt Simulationen der Automatisierungsanlage im Vorfeld durchgeführt.

Die angesprochenen Simulationen können bereits durchgeführt werden, wenn die in Hardware ausgeführten Komponenten des Automatisierungssystems noch gar nicht vorhanden sind. In diesem Fall wird ein Rechner eingesetzt, um das Verhalten der Anlagenkomponenten nachzubilden. Ziel dieser Nachbildung ist es, das zu simulierende Steuerungsprogramm mit sinnvollen Eingangssignalen zu belegen, die in Abhängigkeit der vom Steuerungsprogramm generierten Ausgangssignale erzeugt werden.

Zur Steuerung eines Automatisierungsprogramms werden in der Regel speicherprogrammierbare Steuerungen (SPS) eingesetzt. Für eine SPS ist die Umwelt nur in Form von Eingangssignalen sichtbar, die in Abhängigkeit des implementierten Steuerungscodes mit entsprechenden Ausgangssignalen beantwortet werden. In einer realen Anlage erhält das Steuerungsprogramm seine Eingangswerte von Sensoren und liefert die Ausgangssignale an Aktoren des Automatisierungssystems.

Weiterhin lässt sich ein Automatisierungssystem in viele verschiedene Komponenten und Einheiten unterteilen, zwischen denen eine Datenkommunikation während des automatisierten Betriebs fortlaufend besteht.

Zur korrekten Simulation des Automatisierungssystems müssen diese Signalflüsse durch ein geeignetes Verhaltensmodell nachgebildet werden. Je nach Komplexität und Vielzahl der im Automatisierungssystem eingesetzten Komponenten ist die Nachbildung dieser Signalflüsse für den Anwender äußerst kompliziert und fehlerträchtig.

In herkömmlichen Simulationssystemen werden die Signalflüsse durch die Vergabe von Namen für globale Variablen oder Übergabeparameter realisiert. Die Verbindungen zwischen den miteinander kommunizierenden Komponenten können in einem Userface durch grafische Verbindungslinien oder beidseitiges Eintragen entsprechender Variablennamen modelliert werden. Je komplexer das zu modellierende Automatisierungssystem aufgebaut ist, desto fehleranfälliger ist eine derartige Vorgehensweise. Darüber hinaus resultiert die Definition der Signalflüsse in Form von grafischen Verbindungslinien häufig in einer sehr unübersichtlichen Darstellung, die das Auffinden etwaiger Fehler extrem erschwert.

Eine solche Vorgehensweise ist beispielsweise aus der deutschen Offenlegungsschrift DE 10 2004 019432 A1 bekannt.

Der Erfindung liegt daher die Aufgabe zugrunde, einem Benutzer die Modellierung von Signalflüssen innerhalb eines Automatisierungssystems zu erleichtern.

Diese Aufgabe wird durch ein System und ein Verfahren zur Erzeugung eines Verhaltensmodells zur Simulation eines Automatisierungssystems gemäβ dem in den Ansprüchen 1 und 9 definierten Gegenstand gelöst.

Vorteilhafte Ausgestaltungen der Erfindung ergeben sich aus den Unteransprüchen.

Zur Planung und Projektierung eines Automatisierungssystems werden zunächst CAD Zeichnungen der Komponenten des Automatisierungssystems mit Hilfe der CAD Anwendung erstellt. Dies ist in der Regel stets der erste Schritt, den ein Projekteur bei dieser Aufgabe durchführen wird. Der Erfindung liegt nun die Idee zugrunde, bereits in der CAD Anwendung räumliche Grenzen in Form der geometrischen Geltungsbereiche zu den Schnittstellen der Komponenten des Automatisierungssystems zu definieren, in denen die zugehörige Schnittstelle Daten und Signale weitergeben kann. Diese räumlichen Bereiche können beispielsweise den Eingriff eines mechanischen Steckkontaktes nachbilden oder bei einer berührungslosen Datenübertragung z.B. über RFID die Reichweite eines hierfür eingesetzten Transponders.

Stellt sich nun die Frage, ob das erfindungsgemäße System bzw. das hiermit zu erstellende Verhaltensmodell einen Signalfluss zwischen zwei Komponenten des Automatisierungssystems nachbilden soll, so wird zunächst überprüft, ob Geltungsbereiche von Schnittstellen dieser Komponenten die Signalübertragungsvoraussetzung erfüllen. Die Signalübertragungsvoraussetzung definiert, in welcher räumlichen Lage die besagten Geltungsbereiche zueinander angeordnet sein müssen, damit eine Datenkommunikation zwischen den zugehörigen Schnittstellen stattfinden kann. Beispielsweise könnte eine Signalübertragungsvoraussetzung einer Schnittstelle besagen, dass nur dann ein Signalfluss zu einer anderen Schnittstelle möglich ist, wenn sich die zugehörigen Geltungsbereiche komplett überdecken. Alternativ könnte eine Signalübertragungsvoraussetzung fordern, dass eine Signalübertragung möglich ist, wenn sich die zugehörigen Geltungsbereiche zumindest teilweise überlappen. Eine derartige Voraussetzung wäre beispielsweise bei einer drahtlosen Übertragungstechnik denkbar, bei der ein Signalfluss möglich ist, sobald sich die zugehörigen Kommunikationsfelder zumindest teilweise überlappen. Auch ist es denkbar, eine Signalübertragungsvoraussetzung derart zu definieren, dass eine Signalübertragung nur dann möglich ist, wenn sich die beteiligten Geltungsbereiche gerade nicht überlappen.

Platziert also der Anwender innerhalb der CAD Umgebung zwei Komponenten des Automatisierungssystems derart, dass sich die Geltungsbereiche einer Schnittstelle der einen Komponente und einer Schnittstelle der anderen Komponente derart räumlich zueinander befinden, dass die Signalübertragungsvoraussetzung erfüllt ist, so ist eine notwendige Voraussetzung für die Modellierung eines Signalflusses zwischen diesen beiden Komponenten über die besagten Schnittstellen erfüllt. Darüber hinaus überprüft das erfindungsgemäße System jedoch auch noch die Kompatibilität dieser beiden Schnittstellen, bevor ein Signalfluss im Verhaltensmodell modelliert wird.

Auf diese Art und Weise ist der Anwender des erfindungsgemäßen Systems in der Lage, einen Signalfluss zwischen zwei Komponenten zu modellieren, ohne hierfür Verbindungslinien ziehen zu müssen. Damit entfällt auch das Problem von sich überlappenden Verbindungslinien, die zu unübersichtlichen Signalflussdarstellungen führen. Die erfindungsgemäße Modellierung der Signalflüsse ist demgegenüber sehr intuitiv und bietet auch bei großen automatisierungstechnischen Anlagen noch eine sehr übersichtliche Darstellung.

Darüber hinaus ist die Simulation von Signalflüssen mit Hilfe der geometrischen Geltungsbereiche bezüglich der Laufzeit sehr performant. Die erfindungsgemäße Art der Verhaltenssimulation gewährleistet nämlich, dass stets nur relevante Signalflüsse nachgebildet werden. Wird beispielsweise während der Simulation eine Verschiebung zweier Komponenten des Automatisierungssystems modelliert, die zufolge hat, dass Geltungsbereiche, die vor der Verschiebung die Signalübertragungsvoraussetzung erfüllt haben, dies nach der Verschiebung nicht mehr tun, so entfällt auch die Simulation des danach nicht mehr vorhandenen Signalflusses. Dies ist dadurch ge-währleistet, dass das System automatisch erkennt, dass keine Signalübertragungsvoraussetzung mehr erfüllt ist. Entsprechend kann hierdurch Rechenzeit im Vergleich zu den aus dem Stand der Technik bekannten Simulationsverfahren eingespart werden.

Die Datenschnittstellen von Komponenten des Automatisierungssystems unterscheiden sich bei realen Komponenten in der Regel zwischen Ein- und Ausgängen, wobei die Komponenten des Automatisierungssystems in der Simulation durch entsprechende Programmcodes nachgebildet werden. Innerhalb dieser Programmcodes werden an den Eingängen der Komponenten anliegende Signale zur Belegung von Variablen verwendet. Von den Programmcodes errechnete Eingangswerte werden wiederum an die Ausgänge der Komponenten geschrieben. Entsprechend ist eine Ausführung der Erfindung vorteilhaft, bei der das System fünfte Mittel zur Definition jeweils einer Signalflussrichtung für die Datenschnittstellen umfasst, zu deren Berücksichtigung die vierten Mittel bei der Modellierung des Signalflusses eingerichtet sind. Somit ist der Anwender in der Lage, die Datenschnittstellen der Komponenten als Ein- oder Ausgänge zu deklarieren. Die Signalflussrichtung kann auch bei der Kompatibilitätsprüfung berücksichtigt werden, da das System automatisch erkennen kann, wenn der Anwender fälschlicher Weise die Signalübertragungsvoraussetzung mit zwei Geltungsbereichen erfüllt, die jedoch beide Eingänge oder beide Ausgänge sind. In einem solchen Fall würde die Kompatibilitätsüberprüfung des Systems negativ ausfallen.

Darüber hinaus können jedoch noch weitere Kriterien zur Überprüfung der Kompatibilität von Datenschnittstellen herangezogen werden. Beispielsweise kennzeichnet sich eine weitere vorteilhafte Ausgestaltung der Erfindung dadurch, dass das System sechste Mittel zur Definition jeweils einer Signalkategorie für die Datenschnittstelle umfasst, die die Kategorie der über die zugehörige Schnittstelle austauschbaren Werte kennzeichnet, und wobei die dritten Mittel zur Kompatibilitätsüberprüfung zwischen den Datenschnittstellen auf Basis der Signalkategorien eingerichtet sind. Bei einer derartigen Signalkategorie kann es sich beispielsweise um eine Kategorie "Position" handeln. So kann die Position beispielsweise eines Werkstücks von einer Komponente an eine andere Komponente des Automatisierungssystems übertragen werden. Zwei Datenschnittstellen, deren Geltungsbereiche die Signalübertragungsvoraussetzung erfüllen und die beide der Signalkategorie ,,Positionen" angehören, würden ein solches Kompatibilitätskriterium erfüllen.

Ein weiteres Kriterium beim Austausch von Daten, die zur weiteren Datenverarbeitung von Computerprogrammen verwendet werden, stellt der Datentyp dar. Entsprechend gestaltet sich eine vorteilhafte Ausführung der Erfindung derart, dass das System siebte Mittel zur Definition jeweils eines Datentyps für über die Datenschnittstellen austauschbare Werte umfasst und wobei die dritten Mittel zur Kompatibilitätsüberprüfung zwischen den Datenschnittstellen auf Basis des Datentyps eingerichtet sind.

In realen Automatisierungssystemen kommen verschiedene technische Ausführungen von Datenschnittstellen zum Einsatz. So können Daten optisch, elektrisch leitungsgebunden oder auch drahtlos übertragen werden. Entsprechend ist es vorteilhaft, eine Ausgestaltung der Erfindung vorzusehen, bei der die zweiten Mittel zur Definition jeweils einer Signalübertragungsvoraussetzung für jeden Geltungsbereich eingerichtet sind. Denn eine leitungsgebundene Datenübertragung, bei der die Datenübertragungsschnittstellen in Form von Steckverbindungen ausgeführt sind, erfordert eine andere Signalübertragungsvoraussetzung als eine drahtlosen Kommunikationsstrecke.

Werden hingegen in einem Automatisierungssystem durchweg Datenschnittstellen gleichen Typs verwendet, so kann eine vereinfachte Ausgestaltung der Erfindung als vorteilhaft angesehen werden, bei der die zweiten Mittel zur Definition genau einer Signalübertragungsvoraussetzung für alle Geltungsberei-che eingerichtet sind. Hierdurch reduziert sich der Deklarationsaufwand des Anwenders.

Ein Automatisierungssystem besteht in der Regel aus einer Vielzahl von Sensoren und Aktoren die miteinander und mit im Automatisierungssystem zu verarbeitenden Werkstücken interagieren. Bei der Erzeugung von Verhaltensmodellen zu derartigen Automatisierungssystemen werden Sensorsignale heute in der Regel in Abhängigkeit vordefinierter Zeitintervalle generiert. Eine für den Anwender erhebliche Vereinfachung stellt eine Ausgestaltung der Erfindung dar, bei der das System achte Mittel zur Definition eines Interaktionsbereiches für mindestens eine Komponente des Automatisierungssystems anhand der CAD Zeichnung umfasst, wobei der Interaktionsbereich die geometrischen Grenzen festlegt, innerhalb derer die zugehörige Komponente sensorisch oder aktorisch wirksam ist, und wobei die vierten Mittel zur Verknüpfung des Interaktionsbereiches und der Abmaße von in der CAD Anwendung gezeichneten Werkstücken bei der Erstellung des Verhaltensmodells eingerichtet sind derart, dass bei der Simulation des Automatisierungssystems ein Werkstück bei einem Eintritt in den Interaktionsbereich automatisch die Simulation der sensorischen oder aktorischen Wirkung der dem Interaktionsbereich zugehörigen Komponente auslöst.

Bei dieser Ausführungsform werden die Sensorsignale nicht mehr in Abhängigkeit von vom Anwender vordefinierten Zeitintervallen generiert sondern ereignisgesteuert, d.h. beispielsweise aufgrund eines auf den Materialfluss innerhalb der automatisierungstechnischen Anlage zurückzuführendes Ereignisses. Der Anwender definiert hierzu die Interaktionsbereiche ähnlich wie die Geltungsbereiche direkt innerhalb der CAD Anwendung. Dadurch wird eine höchstmögliche Datenkonsistenz erreicht, da die beim Entwurf des Automatisierungssystems erzeugten CAD Daten auch für die Erstellung des Verhaltensmodells verwendet werden.

So wird bei dieser Ausführungsform der Interaktionsbereich, in dem eine Komponente des Automatisierungssystems sensorisch oder aktorisch wirksam ist, direkt in der CAD Zeichnung des Automatisierungssystems definiert. Für eine als Aktor ausgeführte Komponente gibt der Interaktionsbereich hierbei die geometrischen Grenzen an, innerhalb derer der Aktor wirken kann. Der Interaktionsbereich beschreibt also die geometrischen Abmaße, in denen der Aktor beispielsweise auf ein Werkstück zugreifen kann, um dessen Position oder Ausrichtung zu verändern oder aber die Gestalt des Werkstücks durch Montagevorgänge oder materialbearbeitende Prozesse zu modifizieren.

Handelt es sich bei der Komponente hingegen um einen Sensor, so beschreibt der Interaktionsbereich das vom Sensor erfasste Volumen. Sobald ein Werkstück in diesen besagten Interaktionsbereich eintritt, kann der Sensor ein entsprechendes Eingangssignal für das zu testende Steuerungsprogramm ereignisgesteuert generieren. Da die CAD Zeichnung des Automatisierungssystems bereits sämtliche Abmaße beschreibt und daher eine geeignete Grundlage zur Definition geometrischer Geltungs- und Interaktionsbereiche darstellt, erhöht sich der Anwenderkomfort insbesondere durch die beschriebene Ausgestaltungsform erheblich. So kann das System auch innerhalb der CAD Anwendung dem Anwender die Möglichkeit zur Verfügung stellen, auch die Abmaße der Werkstücke zu definieren. Für die Verhaltenssimulation mit einer derartigen Ausführungsform müssen diese Abmaße bekannt sein, da anhand der Abmaße und der geometrischen Ausmaße der Interaktionsbereiche festgestellt werden kann, ob bzw. wann sich ein Werkstück in einem Interaktionsbereich eines Sensors oder Aktors befindet.

Sobald sich die Abmaße des Werkstücks in dem Interaktionsbereich eines Sensors oder dem Wirkungsbereich eines Aktors befinden, wird ein dem Sensor bzw. Aktor zugehöriger Programmcode von einem Simulator gestartet, der die entsprechende Funktionalität der Komponenten nachbildet. Auf diese Art und Weise können Eingangs- bzw. Ausgangssignale ereignisgesteuert innerhalb der Verhaltenssimulationen nachgebildet werden. Komplexe Automatisierungssysteme können daher mit einem derartigen System sehr viel einfacher und auch genauer nachgebildet werden, als dies mit herkömmlichen Verhaltenssimulationen gelingt, bei denen Sensor- und Aktorsignale lediglich zeitabhängig nachgebildet werden.

In weiterer vorteilhafter Ausgestaltung der Erfindung sind die zweiten, dritten und vierten Mittel und, falls vorhanden, die fünften, sechsten, siebten und achten Mittel in ein Engineeringsystem integriert. Ein derartiges Engineeringsystem ermöglicht es, die in einer frühen Planungsphase entstehenden CAD Daten auch während der Simulation des geplanten Automatisierungssystems zu verwenden und somit eine höchstmögliche Datenkonsistenz in der Planungsphase zu ermöglichen.

Im Folgenden wird die Erfindung anhand der in den Figuren dargestellten Ausführungsbeispiele näher beschrieben und erläutert.

Es zeigen:
- FIG 1: eine CAD Zeichnung als Grundlage zur Generierung ei- nes Verhaltensmodells mit einem System gemäß einer Ausführung der Erfindung mit Komponenten mit offenen Datenschnittstellen,
- FIG 2: die CAD Zeichnung gemäß FIG 1, wobei ein Signalfluss zwischen den Komponenten stattfindet, und
- FIG 3: eine weitere CAD Zeichnung als Grundlage zur Gene- rierung eines Verhaltensmodells mit einem System ge- mäß einer Ausführung der Erfindung.

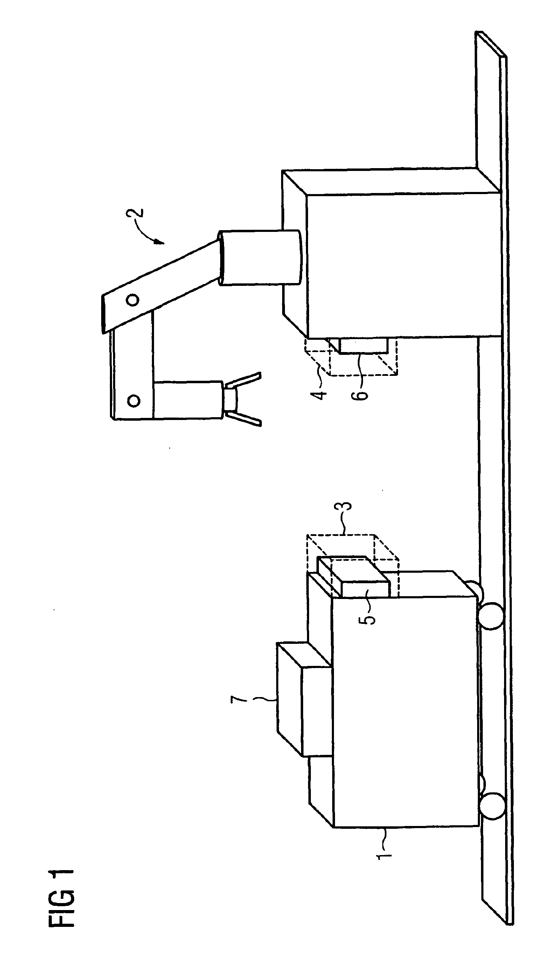

FIG 1 zeigt eine CAD Zeichnung als Grundlage zur Generierung eines Verhaltensmodells mit einem System gemäß einer Ausführung der Erfindung, wobei Komponenten 1,2 mit offenen Datenschnittstellen 5,6 dargestellt sind. Die Zeichnung wurde mit Hilfe einer CAD Umgebung erstellt, die Teil eines umfangrei-chen Engineeringsystems zur Planung und Projektierung von Automatisierungssystemen ist. In den zu planenden Automatisierungssystemen werden Werkstücke 7 auf autonomen Transporteinheiten bewegt, von denen die Figur die CAD Darstellung einer dieser Transporteinheiten beispielhaft zeigt. So stellt eine erste Komponente 1 des Automatisierungssystems eine solche fahrende Transporteinheit dar, die eine Aufnahme für ein Werkstück 7 umfasst. Eine zweite Komponente 2 des Automatisierungssystems bildet eine Bearbeitungsstation, die zur Bearbeitung des transportierten Werkstücks 7 vorgesehen ist. Die erste Komponente 1 transportiert das Werkstück 7 während eines zu simulierenden Fertigungsprozesses zu der zweiten Komponente 2. Die erste Komponente 1 enthält eine erste Schnittstelle 5, über die sie Daten mit einer zweiten Schnittstelle 6 der Bearbeitungsstation austauschen kann, sobald sich die Transporteinheit in Kommunikationsnähe befindet. Wenn die Transporteinheit nahe genug an die Bearbeitungsstation herangefahren ist, so dass eine Kommunikation zwischen den Datenschnittstellen 5,6 möglich ist, werden Signale und Daten über den eigenen Zustand und den Zustand des Werkstücks 7 mit der Steuerung der Bearbeitungsstation ausgetauscht. Die Steuerung der Bearbeitungsstation leitet daraufhin den jeweiligen Bearbeitungsschritt ein.

Die Transporteinheiten besitzen eine eigene Steuerung mit Datenspeicher, Aktorik und Sensorik zur Aufnahme und Positionierung von Werkstücken 7. Weiterhin besitzen sie eine eigene Aktorik und Sensorik zur Realisierung der Verfahrbewegungen der Transporteinheit selbst sowie die bereits erwähnte erste Datenschnittstelle 5 zur Übergabe der Daten über den Zustand der Transporteinheit und des Werkstücks 7. Die erste Datenschnittstelle 5 und die zweite Datenschnittstelle 6 kommunizieren mittels RFID Technologie. Ihre Reichweite ist räumlich begrenzt. Entsprechend können die Signale und Daten auch nur in einen räumlich beschränkten Bereich weitergegeben werden. Um diese Information dem System zur Verfügung zu stellen, definiert der Anwender innerhalb der CAD Umgebung sogenannte Geltungsbereiche 3,4. So ist der ersten Datenschnittstelle 5 ein erster Geltungsbereich 3 zugeordnet, der den räumlich beschränkten Bereich angibt, in dem eine Datenkommunikation mit einer komplementären RFID Schnittstelle möglich ist, wenn sich ein entsprechender Geltungsbereich dieser komplementären RFID Schnittstelle mit dem ersten Geltungsbereich 3 zumindest teilweise überlappt.

Analog besitzt auch die zweite Komponente 2 bzw. deren zweite Schnittstelle 6 einen zweiten Geltungsbereich 4, der in ähnlicher Weise den beschränkten Kommunikationsbereich der zugehörigen zweiten Schnittstelle 6 definiert. In dem hier dargestellten Beispiel befindet sich die Transporteinheit zu weit entfernt von der Bearbeitungsstation, als dass es zu einer Überlappung der Geltungsbereiche 3,4 käme. Daher ist in dem hier dargestellten Szenario ein Signalfluss zwischen der ersten und zweiten Komponente 1,2 nicht möglich.

Nachdem der Anwender in der CAD Umgebung die mechanische Konstruktion der Komponenten 1,2 abgeschlossen hat und die Geltungsbereiche 3,4 definiert hat, werden mit Hilfe des Engineeringsystems weitere Planungen und Projektierungen für diese Anlage durchgeführt. Dazu wird die dargestellte CAD Zeichnung in das Engineeringsystem importiert. Das Engineeringsystem wird nun zu jedem automatisierungstechnischen Element - also in dem Beispiel zu jeder der Komponenten 1,2 - eine als Ressource bezeichnetes Datenobjekt anlegen. Diesen Ressourcen werden sogenannte Facetten hinzugefügt, die eine Auflistung der Signale, funktionale Beschreibungen und Steuerungscodefragmente enthalten. Den Signalen werden dabei Signalkategorien, Signalflussrichtungen, Datentyp, Verbindungsarten und deren Bezeichnungen zugeordnet. Weiterhin werden diese sogenannten Ressourcen mit den Elementen in den CAD Modellen qualifiziert, die dem korrespondierenden Objekt, u.U. dem Wirkbereich eines Aktors bzw. dem Erfassungsbereich eines Sensors und den Geltungsbereichen 3,4 der Signale in der CAD Zeichnung entsprechen. Die Geltungsbereiche 3,4 der Signale werden von einem Extention Package des Engineeringsystems ausgewertet, um Simulationen von Steuerungsprogrammen zu erstellen. Dazu werden zu jedem Signal Informationen über seinen Geltungsbereich 3,4, die Signalkategorie, die Richtung des Signalflusses, den Datentyp, die Verbindungsart und die Bezeichnung neben den funktionalen Beschreibungen an ein zur Simulation vorgesehenes Zielsystem übergeben.

In der Simulation wird jede Ressource durch ein Element beschrieben. Diese Elemente besitzen ein Verhalten, welches der funktionalen Beschreibung der jeweiligen Ressource entspricht. Dieses Verhalten drückt sich durch Veränderung der Eigenschaften, der Schnittstellenparameter und der räumlichen Lage des Elementes aus. Die Schnittstellenparameter entsprechen den Signalen der Ressourcen im Engineeringsystem. Diese Zuordnung ist über die gleichnamige Bezeichnung der Signale und der Schnittstellenparameternamen in den funktionalen Beschreibungen dargestellt. Während des Ablaufs der Simulation werden die Signale verbunden, die überlappende Geltungsbereiche 3,4 und identische Signalkategorien, Datentypen und Verbindungsarten aufweisen. Zwischen den verbundenen Signalen werden die jeweiligen Daten in Richtung des festgelegten Signalflusses ausgetauscht. Ein solcher Signalaustausch kommt nur zustande, wenn sich die Geltungsbereiche 3,4 überlappen und damit eine gültige Signalübertragungsvoraussetzung erfüllen.

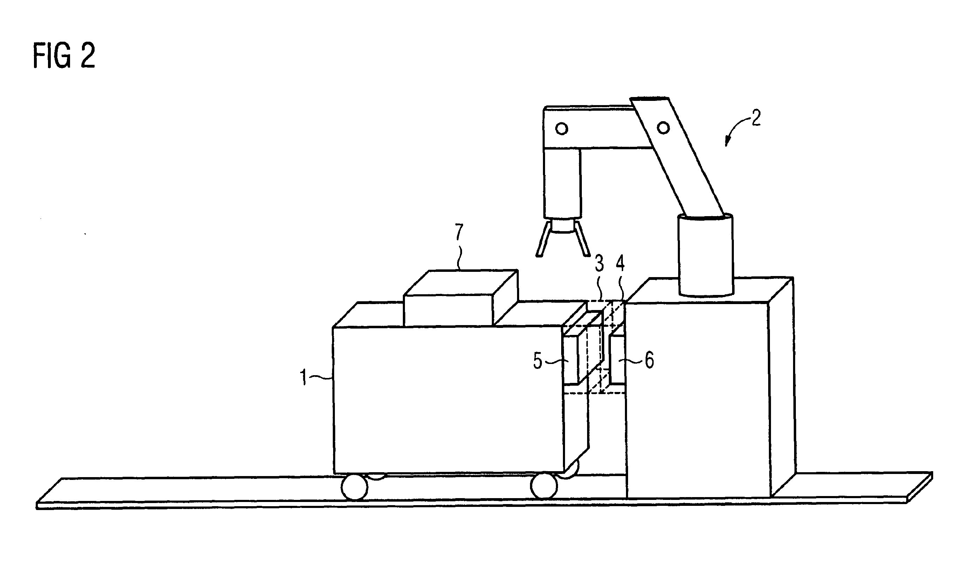

Ein solcher Signalaustausch ist in FIG 2 dargestellt. Denn FIG 2 zeigt die CAD Zeichnung gemäß FIG 1, wobei ein Signalfluss zwischen den Komponenten 1,2 stattfindet, da sich die Geltungsbereiche 3,4 der ersten und zweiten Datenschnittstelle 5,6 nun überlappen. Zu dieser Überlappung kommt es, da sich die autonome Transporteinheit mit dem Werkstück 7 weiter auf die Bearbeitungsstation zu bewegt hat. Das Engineeringsystem stellt nun sowohl diese Überlappung und damit die gültige Signalübertragungsvoraussetzung fest als auch die Kompatibilität der ersten Datenschnittstelle 5 mit der zweiten Datenschnittstelle 6. Entsprechend der vorprojektierten Signalflussrichtung kommt es nun zu einem Datenaustausch zwischen der Transporteinheit und der Bearbeitungsstation, wobei Daten bezüglich des Zustandes der Transporteinheit sowie des von dieser transportierten Werkstücks 7 an ein Steuerungsprogramm der Bearbeitungsstation übermittelt werden.

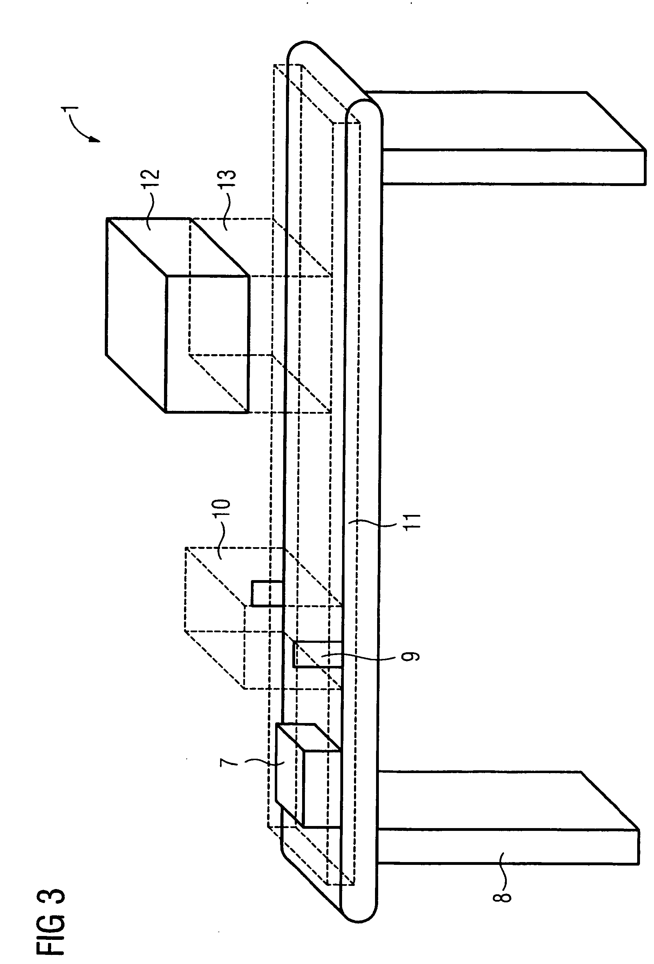

FIG 3 zeigt eine weitere CAD Zeichnung als Grundlage zur Generierung eines Verhaltensmodells mit einem System gemäß einer Ausführung der Erfindung. Die CAD Zeichnung zeigt ein Automatisierungssystem und wird in ein Engineeringsystem importiert, um das Verhaltensmodell für eine Simulation des Automatisierungssystems zu generieren. Da es an dieser Stelle nur um die Erläuterung des Prinzips einer Ausführung der Erfindung gehen soll, ist hier ein sehr einfaches Automatisierungssystem gezeigt, dass lediglich aus einem Förderband 8 besteht, auf dem Werkstücke 7 transportiert werden, die von einem Sensor 9 erfasst werden und von einem Aktor 12 in irgend einer Weise bearbeitet werden. Die Geometrie des Förderbandes 8, des Sensors 9 und des Aktors 12 wurde bereits in einer CAD Anwendung im Vorfeld definiert. Anschließend wurde die CAD Daten in ein Engineeringsystem importiert.

Innerhalb des Engineeringsystems können nun Interaktionsbereiche 10,11,13 für die Sensoren 9 und Aktoren 12 des Automatisierungssystems definiert werden. Es ergibt sich ein erster Interaktionsbereich 11, der den Wirkbereich des Förderbandes 8 festlegt. Er beschreibt die geometrischen Grenzen, in denen das von einem hier nicht dargestellten Motor angetriebene Förderband 8 eine translatorische Bewegung von Werkstücken 7 bewirkt, die sich in dem Wirkbereich 11 befinden.

Die Werkstücke 7 werden von einer hier ebenfalls nicht dargestellten autonomen Transporteinheit an das Förderband 8 angeliefert. Diese steht über eine Datenschnittstelle mit dem Förderband in kommunikativer Verbindung, sobald sie das Förderband 8 erreicht. Die Herstellung des Signalflusses geschieht analog zu der in den Figuren 1 und 2 gezeigten Vorgehensweise, indem eine Überlappung entsprechender Geltungsbereiche festgestellt und die Kompatibilität der zugehörigen Datenschnittstellen geprüft und bejaht wird.

Befindet sich nun ein Modell des Werkstücks 7 im Wirkbereich 11 des Förderbandes 8, so wird dessen Bewegung von links nach rechts mit der Geschwindigkeit des Förderbandes 8 automatisch simuliert.

Ebenfalls innerhalb der importierten CAD Zeichnung wird ein Erfassungsbereich 10 des Sensors 9 definiert. Dieser Erfassungsbereich 10 legt wiederum die geometrischen Grenzen fest, innerhalb derer der Sensor 9 das Vorhandensein von Werkstücken 7 detektieren kann. Sobald also das Werkstück 7 in diesen Erfassungsbereich 10 eintritt, wird der Sensor 10 ein binäres Signal an eine Steuerung des Automatisierungssystems aussenden. Das Aussenden dieses Signals wird also ereignisgesteuert initiiert. Ein Computerprogrammcode, der das Verhalten des Sensors 9 simuliert, wird in der Verhaltenssimulation dann gestartet, wenn eine Überlappung der geometrischen Abmaße des Werkstücks 7 und des Erfassungsbereichs 10 detektiert wird.

Beim weiteren Transport des Werkstücks 7 auf dem Förderband 8 tritt das Werkstück 7 schließlich in den Wirkbereich 13 des Aktors 12. Dieser ebenfalls in der importierten CAD Zeichnung definierte Interaktionsbereich bestimmt die geometrischen Grenzen des Volumens, innerhalb dessen der Aktor 12 auf das Werkstück 7 einwirken kann. Auch hier wird der Computerprogrammcode, der das Verhalten des Aktors 12 simuliert, ereignisgesteuert ausgeführt, wenn eine vollständige oder teilweise Überlappung der Abmaße des Werkstücks 7 mit dem Wirkbereich 13 des Aktors 12 festgestellt wird.

Aus dem in der CAD Zeichnung projektierten Wirk- bzw. Erfassungsbereichen und der mit ihnen verknüpften Verhaltensweisen wird also ein Verhaltensmodell für ein Simulationssystem erstellt, mit dem das Verhalten des Automatisierungssystems bzw. des Steuerungsprogramms, das das Automatisierungssystem steuert, simuliert wird. Diese Erstellung erfolgt automatisch, ohne dass der Benutzer eingreifen muss. Hierbei greift das Simulationssystem auf die geometrischen Informationen aus der CAD Zeichnung zu, um die Interaktionsbereiche 10,11,13 einzulesen. Die Simulation überprüft automatisch anhand der Position des Werkstücks 7, welche Interaktionsbereiche 10,11,13 aktiv sind und wendet die in Form eines entsprechenden Computerprogrammcodes definierten Aktionen auf das Werkstück 7 bzw. auf das Prozessabbild an. Eine solche Simulation kann nicht nur wie in der Figur dargestellt die Position des Werkstücks 7 ändern, sondern auch interne Zustände des Werkstücks 7 wie beispielsweise Gewicht, Seriennummer und ähnliches modifizieren. Diese inneren Zustände können wiederum von Sensoren ausgelesen werden.

Innerhalb des Wirkbereiches 13 des Aktors 12 können auch physikalische Gesetzmäßigkeiten simuliert werden, die der Interaktion des Aktors 12 mit dem Werkstück 7 zugrunde liegen. Hierbei können physikalische Parameter wie Trägheit, Drehmomente, Schlupf und Beschleunigungen bzw. Kollisionen mit ihren Stößen und Bewegungsseinschränkungen für die Werkstücke 7 berücksichtigt werden. Die für diese Berücksichtigung benötigten physikalischen Größen können ebenfalls der CAD Zeichnung des Automatisierungssystems bzw. der Antriebssteuerung entnommen werden, ohne dass der Anwender hierzu eine aufwendige Projektierung durchführen muss. Beispielsweise kann die Wirkung der Gravitation innerhalb der Simulation dadurch berücksichtigt werden, dass ein die komplette Anlage umfassendes Wirkfeld definiert wird, dass den in diesem Wirkfeld vorhandenen Werkstücken die Erdanziehungskraft auferlegt.

Die Erfindung ermöglicht es, ein Steuerungsprogramm mit einer Anlagen- und Materialflusssimulation sowie einer Datenflusssimulation zu verknüpfen. Hierdurch lassen sich der Steuerungsablauf und die Vollständigkeit der Sensorik und Aktorik verifizieren. Mit relativ einfachen Mitteln der vorgestellten Methodik kann ein sehr realistisches Verhaltensmodell generiert werden. Dieses Verhaltensmodell geht über eine einfache Bewegungssimulation hinaus. Auf diese Art und Weise können auch Extremsimulationen simuliert werden, wie z.B. ein Stau von Werkstücken vor einer Bearbeitungsstation, ein Anlagenverhalten im Fehlerfall oder ein Ausfall der Sensorik oder der Aktorik. Auf eine aufwendige Modellierung des Verhaltens in Form von Algorithmen kann hierbei verzichtet werden. Vielmehr kann der Anlagenplaner in seiner gewohnten CAD dominierten Umgebung bleiben und dort realistische Verhaltensmodelle generieren.

Hierbei ist eine Nachprogrammierung der Dimensionen und Platzierung realer Objekte nicht mehr erforderlich. Es findet auch keine spezifische Aufbereitung der CAD Daten für die Simulation statt. Das System nimmt automatisch die Daten der Objekte des Automatisierungssystems aus der CAD Anwendung. Auf diese Art und Weise werden alle Daten über die Anlage stets in einer einheitlichen Form und Version für alle Anwendungen verwendet. Dadurch ist die Konsistenz und die Synchronisierung der Daten über den gesamten Produktlebenszyklus gewährleistet.

## Patentansprüche

1. System zur Erzeugung eines Verhaltensmodells zur Simulation eines Automatisierungssystems mit
- einer CAD Anwendung zur Erstellung von CAD Zeichnungen von Komponenten (1,2,8,9,12) des Automatisierungssystems, wobei die CAD Anwendung erste Mittel zur Definition jeweils eines geometrischen Geltungsbereiches (3,4) zu Datenschnittstellen (5,6) der Komponenten (1,2,8,9,12) aufweist,
- zweiten Mittel zur Definition mindestens einer Signalübertragungsvoraussetzung, die mindestens eine relative Lage zweier Geltungsbereiche (3,4) zueinander kennzeichnet, bei der zur Datenkommunikation zwischen den Datenschnittstellen eine Signalübertragung zwischen den zugehörigen Datenschnittstellen (5,6) möglich ist,
- dritten Mitteln zur Kompatibilitätsüberprüfung von den Datenschnittstellen (5,6), bei denen die Signalübertragungsvoraussetzung erfüllt ist, und
- vierten Mittel zur Erzeugung des Verhaltensmodells derart, dass ein Signalfluss zwischen den Datenschnittstellen (5,6), bei denen die Signalübertragungsvoraussetzung und die Kompatibilität erfüllt sind, in der Simulation modelliert wird.

2. System nach Anspruch 1,
wobei das System fünfte Mittel zur Definition jeweils einer Signalflussrichtung für die Datenschnittstellen (5,6) umfasst, zu deren Berücksichtigung die vierten Mittel bei der Modellierung des Signalflusses eingerichtet sind.

3. System nach Anspruch 1 oder 2,
wobei das System sechste Mittel zur Definition jeweils einer Signalkategorie für die Datenschnittstellen (5,6) umfasst, die die Kategorie der über die zugehörige Schnittstelle (5,6) austauschbareren Werte kennzeichnet, und wobei die dritten Mittel zur Kompatibilitätsüberprüfung zwischen den Datenschnittstellen (5,6) auf Basis der Signalkategorien eingerichtet sind.

4. System nach einem der vorhergehenden Ansprüche,
wobei das System siebte Mittel zur Definition jeweils eines Datentyps für über die Datenschnittstellen (5,6) austauschbare Werte umfasst und wobei die dritten Mittel zur Kompatibilitätsüberprüfung zwischen den Datenschnittstellen (5,6) auf Basis des Datentyps eingerichtet sind.

5. System nach einem der vorhergehenden Ansprüche,
wobei die zweiten Mittel zur Definition jeweils einer Signalübertragungsvoraussetzung für jeden Geltungsbereich (3,4) eingerichtet sind.

6. System nach einem der Ansprüche 1 bis 5,
wobei die zweiten Mittel zur Definition genau einer Signalübertragungsvoraussetzung für alle Geltungsbereiche (3,4) eingerichtet sind.

7. System nach einem der vorhergehenden Ansprüche,
wobei das System achte Mittel zur Definition eines Interaktionsbereiches (10,11,13) für mindestens eine Komponente (1,2,8,9,12) des Automatisierungssystems anhand der CAD Zeichnung umfasst, wobei der Interaktionsbereich (10,11,13) die geometrischen Grenzen festlegt, innerhalb derer die zugehörige Komponente (1,2,8,9,12) sensorisch oder aktorisch wirksam ist, und wobei die vierten Mittel zur Verknüpfung des Interaktionsbereiches (10,11,13) und der Abmaße von in der CAD Anwendung gezeichneten Werkstücken (7) bei der Erstellung des Verhaltensmodells eingerichtet sind derart, dass bei der Simulation des Automatisierungssystems ein Werkstück (7) bei einem Eintritt in den Interaktionsbereich (10,11,13) automatisch die Simulation der sensorischen oder aktorischen Wirkung der dem Interaktionsbereich (10,11,13) zugehörigen Komponente (1, 2, 8, 9, 12) auslöst.

8. System nach einem der vorhergehenden Ansprüche,
wobei die zweiten, dritten und vierten Mittel und, falls vorhanden, die fünften, sechsten, siebten und achten Mittel in ein Engineeringsystem integriert sind.

9. Verfahren zur Erzeugung eines Verhaltensmodells zur Simulation eines Automatisierungssystems mit folgenden Verfahrensschritten:
- Erstellung von CAD Zeichnungen von Komponenten (1,2,8,9,12) des Automatisierungssystems in einer CAD Anwendung, wobei mit der CAD Anwendung jeweils ein geometrischer Geltungsbereich (3,4) zu Datenschnittstellen (5,6) der Komponenten (1,2,8,9,12) definiert wird,
- Definition mindestens einer Signalübertragungsvoraussetzung, die mindestens eine relative Lage zweier Geltungsbereiche (3,4) zueinander kennzeichnet, bei der zur Datenkommunikation zwischen den Datenschnittstellen eine Signalübertragung zwischen den zugehörigen Datenschnittstellen (5,6) möglich ist,
- Kompatibilitätsüberprüfung der Datenschnittstellen (5,6), bei denen die Signalübertragungsvoraussetzung erfüllt ist, und
- Erzeugung des Verhaltensmodells derart, dass ein Signalfluss zwischen den Datenschnittstellen (5,6), bei denen die Signalübertragungsvoraussetzung und die Kompatibilität erfüllt sind, in der Simulation modelliert wird.

10. Verfahren nach Anspruch 9,
wobei jeweils eine Signalflussrichtung für die Datenschnittstellen (5,6) definiert wird, die bei der Modellierung des Signalflusses berücksichtigt wird.

11. Verfahren nach Anspruch 9 oder 10,
wobei jeweils eine Signalkategorie für die Datenschnittstellen (5,6) definiert wird, die die Kategorie der über die zugehörige Schnittstelle (5,6) austauschbareren Werte kennzeichnet, und wobei die Kompatibilität zwischen den Datenschnittstellen (5,6) auf Basis der Signalkategorien überprüft wird.

12. Verfahren nach einem der Ansprüche 9 bis 11,
wobei jeweils ein Datentyp für über die Datenschnittstellen (5,6) austauschbare Werte definiert wird und wobei die Kompatibilität zwischen den Datenschnittstellen (5,6) auf Basis des Datentyps überprüft wird.

13. Verfahren nach einem der Ansprüche 9 bis 12,
wobei jeweils eine Signalübertragungsvoraussetzung für jeden Geltungsbereich (3,4) definiert wird.

14. Verfahren nach einem der Ansprüche 9 bis 12,
wobei genau eine Signalübertragungsvoraussetzung für alle Geltungsbereiche (3,4) definiert wird.

15. Verfahren nach einem der Ansprüche 9 bis 14,
wobei ein Interaktionsbereich (10,11,13) für mindestens eine Komponente (1,2,8,9,12) des Automatisierungssystems anhand der CAD Zeichnung definiert wird, der die geometrischen Grenzen festlegt, innerhalb derer die zugehörige Komponente (1,2,8,9,12) sensorisch oder aktorisch wirksam ist, und wobei der Interaktionsbereich (10,11,13) und die Abmaße von in der CAD Anwendung gezeichneten Werkstücken (7) bei der Erstellung des Verhaltensmodells miteinander verknüpft werden derart, dass bei der Simulation des Automatisierungssystems ein Werkstück (7) bei einem Eintritt in den Interaktionsbereich (10,11,13) automatisch die Simulation der sensorischen oder aktorischen Wirkung der dem Interaktionsbereich (10,11,13) zugehörigen Komponente (1,2,8,9,12) auslöst.

## Claims

1. System for generating a behaviour model for the simulation of an automation system comprising
- a CAD application for the development of CAD drawings of components (1,2,8,9,12) of the automation system, wherein the CAD application comprises first means for the definition of a geometric scope of application (3,4) for the data interfaces (5,6) of the components (1, 2, 8, 9, 12),
- second means for the definition of at least one signal transmission prerequisite, which marks at least one relative position of two scopes of application (3,4) relative to each other, at which signal transmission for the communication of data between the data interfaces, is possible between the associated data interfaces (5,6),
- third means for the compatibility verification of the data interfaces (5,6) at which the signal transmission prerequisite is met, and
- fourth means for the generation of the behaviour model such that a signal flow between the data interfaces (5,6) at which the signal transmission prerequisite and compatibility are met is modelled in the simulation.

2. System according to claim 1,
wherein the system comprises fifth means for the definition of a signal flow direction for the data interfaces (5,6), for consideration of which the fourth means are configured in the modelling of the signal flow.

3. System according to claim 1 or claim 2, wherein the system comprises sixth means for the definition of a signal category for the data interfaces (5,6), which signal category marks the category of the values which can be exchanged via the associated interface (5,6), and wherein the third means for compatibility verification between the data interfaces (5,6) are configured on the basis of the signal categories.

4. System according to one of the preceding claims, wherein the system comprises seventh means for the definition of a data type for values which can be exchanged via the data interfaces (5,6) and wherein the third means for compatibility verification between the data interfaces (5,6) are configured on the basis of the data type.

5. System according to one of the preceding claims, wherein the second means are configured for the definition of a signal transmission prerequisite for each scope of application (3,4).

6. System according to one of claims 1 to 5, wherein the second means are configured for the definition of precisely one signal transmission prerequisite for all the scopes of application (3,4).

7. System according to one of the preceding claims, wherein the system comprises eighth means for the definition of an interaction area (10,11,13) for at least one component (1,2,8,9,12) of the automation system with the aid of the CAD drawing, wherein the interaction area (10,11,13) specifies the geometric limits within which the associated component (1,2,8,9,12) is active as a sensor or as an actuator, and wherein the fourth means are configured for linking the interaction area (10,11,13) and the dimensions of workpieces (7) drawn in the CAD application in the development of the behaviour model such that, in the simulation of the automation system, a workpiece (7), upon entry into the interaction area (10,11,13), automatically triggers the simulation of the sensory or actuatory action of the component (1,2,8,9,12) associated with the interaction area (10,11,13).

8. System according to one of the preceding claims, wherein the second, third and fourth means and, if present, the fifth, sixth, seventh and eighth means are integrated in an engineering system.

9. Method for generating a behaviour model for the simulation of an automation system, comprising the following method steps:
- development of CAD drawings of components (1,2,8,9,12) of the automation system in a CAD application, wherein, by means of the CAD application, a geometric scope of application (3,4) is defined for data interfaces (5,6) of the components (1, 2, 8, 9, 12),
- definition of at least one signal transmission prerequisite, which marks at least one relative position of two scopes of application (3,4) relative to each other, at which signal transmission for the communication of data between the data interfaces, is possible between the associated data interfaces (5,6),
- compatibility verification of data interfaces (5,6) at which the signal transmission prerequisite is met, and
- generation of the behaviour model such that a signal flow between the data interfaces (5,6) at which the signal transmission prerequisite and compatibility are met is modelled in the simulation.

10. Method according to claim 9, wherein a signal flow direction is defined for the data interfaces (5,6), which is taken into account in the modelling of the signal flow.

11. Method according to claim 9 or 10, wherein a signal category is defined for the data interfaces (5,6), which signal category marks the category of the values which can be exchanged via the associated interface (5,6), and wherein the compatibility between the data interfaces (5,6) is verified on the basis of the signal categories.

12. Method according to one of claims 9 to 11, wherein a data type is defined for values which can be exchanged via the data interfaces (5,6), and wherein the compatibility between the data interfaces (5,6) is verified on the basis of the data type.

13. Method according to one of claims 9 to 12, wherein a signal transmission prerequisite is defined for each scope of application (3,4).

14. Method according to one of claims 9 to 12, wherein precisely one signal transmission prerequisite is defined for all the scopes of application (3,4).

15. Method according to one of claims 9 to 14,
wherein an interaction area (10,11,13) is defined for at least one component (1,2,8,9,12) of the automation system with the aid of the CAD drawing, which specifies the geometric limits with which the associated component (1,2,8,9,12) is active as a sensor or actuator, and wherein the interaction area (10,11,13) and the dimensions of workpieces (7) drawn in the CAD application are linked to each other in the development of the behaviour model such that in the simulation of the automation system a workpiece (7), upon entry into the interaction area (10,11,13), automatically triggers the simulation of the sensory or actuatory action of the component (1,2,8,9,12) associated with the interaction area (10,11,13).

## Revendications

1. Système pour créer un modèle de comportement pour simuler un système d'automatisation, avec :
- une application CAD pour créer des dessins CAD de composants (1, 2, 8, 9, 12) du système d'automatisation, l'application CAD comportant des premiers moyens pour définir respectivement une zone de validité géométrique (3, 4) relative à des interfaces de données (5, 6) des composants (1, 2, 8, 9, 12) ;
- des deuxièmes moyens pour définir au moins une condition de transmission de signaux qui caractérise au moins une position relative de deux zones de validité (3,4) l'une par rapport à l'autre, dans laquelle une transmission de signaux entre les interfaces de données associées (5, 6) est possible aux fins de la communication de données entre les interfaces de données ;
- des troisièmes moyens pour vérifier la compatibilité des interfaces de données (5, 6) au niveau desquelles la condition de transmission de signaux est remplie ; et
- des quatrièmes moyens pour créer le modèle de comportement de manière telle qu'est modélisé, dans la simulation, un flux de signaux entre les interfaces de données (5, 6) au niveau desquelles la condition de transmission de signaux est remplie et la compatibilité est donnée.

2. Système selon la revendication 1, dans lequel le système comprend des cinquièmes moyens pour définir respectivement une direction de flux de signaux pour les interfaces de données (5, 6) pour la prise en compte de laquelle sont aménagés les quatrièmes moyens lors de la modélisation du flux de signaux.

3. Système selon la revendication 1 ou 2, dans lequel le système comporte des sixièmes moyens pour définir respectivement une catégorie de signaux pour les interfaces de données (5, 6), laquelle caractérise la catégorie des valeurs échangeables via l'interface associée (5, 6), et les troisièmes moyens étant aménagés pour vérifier la compatibilité entre les interfaces de données (5, 6) sur la base des catégories de signaux.

4. Système selon l'une des revendications précédentes, le système comportant des septièmes moyens pour définir respectivement un type de données pour des valeurs échangeables via les interfaces de données (5, 6) et les troisièmes moyens étant aménagés pour vérifier la compatibilité entre les interfaces de données (5, 6) sur la base du type de données.

5. Système selon l'une des revendications précédentes, les deuxièmes moyens étant aménagés pour définir respectivement une condition de transmission de signaux pour chaque zone de validité (3, 4).

6. Système selon l'une des revendications 1 à 5, les deuxièmes moyens étant aménagés pour définir exactement une condition de transmission de signaux pour toutes les zones de validité (3, 4).

7. Système selon l'une des revendications précédentes, le système comportant des huitièmes moyens pour définir une zone d'interaction (10, 11, 13) pour au moins un composant (1, 2, 8, 9, 12) du système d'automatisation à l'aide du dessin CAD, la zone d'interaction (10, 11, 13) fixant les limites géométriques dans lesquelles le composant associé (1, 2, 8, 9, 12) agit comme capteur ou comme actionneur et les quatrièmes moyens étant aménagés pour combiner la zone d'interaction (10, 11, 13) et les dimensions de pièces à usiner (7) dessinées dans l'application CAD, lors de la création du modèle de comportement, de manière telle que, lors de la simulation du système d'automatisation, une pièce à usiner (7), lors d'une entrée dans la zone d'interaction (10, 11, 13), déclenche automatiquement la simulation de l'action de capteur ou d'actionneur du composant (1, 2, 8, 9, 12) associé à la zone d'interaction (10, 11, 13).

8. Système selon l'une des revendications précédentes, les deuxièmes, troisièmes et quatrièmes moyens et, s'ils existent, les cinquièmes, sixièmes, septièmes et huitièmes moyens étant intégrés au système d'engineering.

9. Procédé pour créer un modèle de comportement pour simuler un système d'automatisation, comportant les étapes suivantes :
- création de dessins CAD de composants (1, 2, 8, 9, 12) du système d'automatisation dans une application CAD, l'application CAD permettant de définir respectivement une zone de validité géométrique (3, 4) relative à des interfaces de données (5, 6) des composants (1, 2, 8, 9, 12) ;
- définition d'au moins une condition de transmission de signaux qui caractérise au moins une position relative de deux zones de validité (3, 4) l'une par rapport à l'autre, dans laquelle une transmission de signaux entre les interfaces de données associées (5, 6) est possible aux fins de la communication de données entre les interfaces de données ;
- vérification de la compatibilité des interfaces de données (5, 6) au niveau desquelles la condition de transmission de signaux est remplie ; et
- création du modèle de comportement de manière telle qu'est modélisé, dans la simulation, un flux de signaux entre les interfaces de données (5, 6) au niveau desquelles la condition de transmission de signaux est remplie et la compatibilité est donnée.

10. Procédé selon la revendication 9, respectivement une direction de flux de signaux étant définie, pour les interfaces de données (5, 6), laquelle est prise en compte lors de la modélisation du flux de signaux.

11. Procédé selon la revendication 9 ou 10, respectivement une catégorie de signaux étant définie, pour les interfaces de données (5, 6), laquelle caractérise la catégorie des valeurs échangeables via l'interface associée (5, 6), et la compatibilité entre les interfaces de données (5, 6) étant vérifiée sur la base des catégories de signaux.

12. Procédé selon l'une des revendications 9 à 11, respectivement un type de données étant défini pour des valeurs échangeables via les interfaces de données (5, 6) et la compatibilité entre les interfaces de données (5, 6) étant vérifiée sur la base du type de données.

13. Procédé selon l'une des revendications 9 à 12, respectivement une condition de transmission de signaux étant définie pour chaque zone de validité (3, 4).

14. Procédé selon l'une des revendications 9 à 12, exactement une condition de transmission de signaux étant définie pour toutes les zones de validité (3, 4).

15. Procédé selon l'une des revendications 9 à 14, une zone d'interaction (10, 11, 13) étant définie pour au moins un composant (1, 2, 8, 9, 12) du système d'automatisation à l'aide du dessin CAD, laquelle zone fixe les limites géométriques dans lesquelles le composant associé (1, 2, 8, 9, 12) agit comme capteur ou comme actionneur, et la zone d'interaction (10, 11, 13) et les dimensions de pièces à usiner (7) dessinées dans l'application CAD étant combinées entre elles de manière telle, lors de la création du modèle de comportement, que, lors de la simulation du système d'automatisation, une pièce à usiner (7), lors d'une entrée dans la zone d'interaction (10, 11, 13), déclenche automatiquement la simulation de l'action de capteur ou d'actionneur du composant (1, 2, 8, 9, 12) associé à la zone d'interaction (10, 11, 13).
